# EUROPEAN PATENT APPLICATION

(11) **EP 0 854 526 A2**
(43) Date of publication of application: **22.07.1998**
(21) Application number: 97122309.4
(22) Date of filing: 17.12.1997
(51) Int. Cl.: H01M 4/50, H01M 10/40

(54) **Lithium secondary battery**

(30) Priority: 07.01.1997 JP 13091/97; 10.12.1997 JP 362089/97
(71) Applicant: MURATA MANUFACTURING CO., LTD., Nagaokakyo-shi Kyoto-fu (JP)
(72) Inventor: Yamashita, Yasuhisa, Nagaokakyo-shi, Kyoto-fu (JP); Hattori, Koji, Nagaokakyo-shi, Kyoto-fu (JP)
(74) Representative: Zinnecker, Armin, Dipl.-Ing.

(57) **Abstract**

A lithium secondary battery includes an anode, a cathode and one of a separator containing nonaqueous electrolytic solution or solid-state electrolyte, interposed between the anode and the cathode. The anode comprises, as an active material, one of a material capable of absorbing and disorbing lithium ions, lithium metal and lithium alloy. The cathode comprises spinel-structured lithium-manganese complex oxide as an active material. The spinel-structured lithium-manganese complex oxide is in the form of hollow spherical secondary particles formed by sintering single crystalline primary particles.

## Description

### BACKGROUND OF THE INVENTION

### 1. Field of the Invention

The present invention relates to lithium secondary batteries employing spinel-structured lithium-manganese complex oxide as the cathode active material thereof.

### 2. Description of the Related Art

In the recent years, down-sizing and cordless design schemes are being acceleratively developed in the field of electronics apparatus or equipment. In view of such trend, secondary batteries are of increasing interest since these offer increased applicability thereto as the power supply for such electronics equipment due to capability of size reduction and high electrical energy density. As a result, 4-V class lithium secondary batteries of the nonaqueous electrolytic solution type have been commercialized as expectable secondary batteries satisfying the needs.

A lithium secondary battery generally includes (a) a cathode having a lithium-containing compound as the active material, (b) an anode having a material capable of absorbing and desorbing lithium such as a carbon material or lithium metal as the active material and (c) a separator containing a non-aqueous electrolytic solution or a solid electrolyte. The lithium-containing compound to be used as the active material of the cathode may include, for example, LiCoO₂, LiNiO₂, LiMn₂O₄ which are now under study. Recently, attention is drawn to the spine-structured lithium-manganese complex oxide such as LiMn₂O₄, as the natural resource for the complex oxide is expected to exist in large quantity enough to be inexpensive and supplied stably. Accordingly, various lithium secondary batteries comprising the complex oxide as an active material of a cathode have been proposed.

For example, Japanese Laid-Open Patent Application No. 6-333562 discloses a lithium secondary battery comprising an LiMn₂O₄ type compound as the cathode active material, in which the compound is in the form of spherical particles having uniformly roughened surfaces and having a median diameter of from 0.5 to 0.6 mm while being distributed within a particle size range of 0.1 to 1.1 mm . Japanese Laid-Open Patent Application No. 8-69790 discloses a lithium secondary battery comprising a lithium-manganese complex oxide as the cathode active material, in which the complex oxide has specific surface area of from 0.05 to 5.0 m²/g.

However, the conventional lithium secondary batteries comprising such a spinel-structured lithium-manganese complex oxide as the active material are still not satisfactory with respect to the battery capacity and the charge-discharge cycle characteristics.

It is therefore an object of the present invention to provide a lithium secondary battery of large battery capacity with enhanced charge-discharge cycle characteristics.

### SUMMARY OF THE INVENTION

A lithium secondary battery according to the preferred embodiments of the invention includes an anode, a cathode and one of a separator containing nonaqueous electrolytic solution and solid-state electrolyte, interposed between the anode and the cathode. The anode comprises, as an active material, one of a material capable of absorbing and disorbing lithium ions, lithium metal and lithium alloy. The cathode comprises spinel-structured lithium-manganese complex oxide as an active material. The spinel-structured lithium-manganese complex oxide is in the form of hollow spherical secondary particles formed by sintering single crystalline primary particles.

The primary particles preferably have an average diameter of about from 70 to 500 nm and the spinel-structured-structured lithium-manganese complex oxide is preferably represented by a general formula: Li(Mn₂₋ₓLiₓ)O₄ (where 0 ≤ x ≤ 0.1).

According to present invention, the complex oxide used as the cathode active material of the lithium secondary battery has the shape of the hollow spherical particles having many gaps which reach to the inside of the particles. Thus, the nonaqueous electrolytic solution can penetrate the inside of the particles, whereby the complex oxide has a large surface area. This makes it possible to improve the utilization efficiency of the cathode active material and increase the battery capacity.

In addition, since the complex oxide is stable with respect to absorption and desorption of lithium due to the high crystallinity of the primary particles, the lithium secondary battery of the invention exhibits excellent charge-discharge cycle characteristics.

For the purpose of illustrating the invention, there is shown in the drawings several forms which are presently preferred, it being understood, however, that the invention is not limited to the precise arrangements and instrumentalities shown.

### BRIEF DESCRIPTION OF THE DRAWINGS

Fig. 1 is a SEM photograph of the cathode active material in a lithium secondary battery in accordance with the present invention.

Fig. 2 is a cross sectional view of one embodiment of the lithium secondary battery of the invention.

Fig. 3 is a graph showing the charge-discharge cycle characteristics of the lithium secondary battery.

### DETAILED DESCRIPTION OF PREFERRED EMBODIMENTS

Hereinafter, the preferred embodiments of the present invention are explained in detail with reference to the drawings.

A lithium secondary battery in accordance with a preferred embodiment of the present invention includes a cathode, an anode and a separator containing a non-aqueous electrolytic solution or a solid electrolyte.

The cathode comprises a spinel-structured lithium-manganese complex oxide as an active material. Specifically, the complex oxide comprises a hollow spherical secondary particle formed by sintering single crystalline primary particles. According to the complex oxide, the particles of the spinel-structured lithium-manganese complex oxide have many gaps which reach to the inside of the particles so that the non-aqueous electrolytic solution can penetrate the inside of the particles. Thus, the complex oxide has a large area which can be in contact with non-aqueous electrolytic solution, thereby improving the utilization efficiency of the cathode active material.

The primary particles preferably have an average diameter of about from 70 to 500nm. The primary particles having the diameter in this range can form the secondary articles having a relatively large diameter. This allows the cathode active material comprising the complex oxide to be well shaped while the cathode active material has the sufficient specific surface area. Even if the amount of the binder to be added to the cathode active material is reduced, the material still can be shaped into a cathode having an increased energy density per unit volume. Further, since the primary particles forming the secondary particles are single crystallines having a uniform composition, the complex oxide is greatly stable against absorption and desorption of the lithium. Thus, the lithium secondary battery of the invention exhibits excellent charge-discharge cycle characteristics.

The spinel-structured lithium-manganese complex oxide is preferably represented by a general formula: Li(Mn₂₋ₓLiₓ)O₄ (where 0 ≤ x ≤ 0.1) for obtaining a good energy efficiency and charge-discharge cycle characteristics.

The active material for the anode may be selected from carbon or the like which are capable of absorbing and desorbing lithium, lithium metal, lithium alloy or the like.

The nonaqueous electrolytic solution may be a solution prepared by dissolving an electrolyte of a lithium salt, such as LiPF₆, LiClO₄, LiBF₄, LiAsF₆ or the like in a mixed solvent comprising propylene carbonate or ethylene carbonate, and diethoxyethane or dimethoxyetane.

The separator may be porous polypropylene films or non-woven cloth. Further, solid electrolyte may alternatively be employed in place of the separator impregnated with nonaqueous electrolytic solution.

### Embodiment 1:

First, lithium nitrate and manganese formate were prepared as the compounds of metal elements constituting the lithium-manganese complex oxide. Then, lithium nitrate and manganese formate were put into a vessel after accurate measurement in a way such that the molar ratio of lithium (Li) to manganese (Mn) is equal to "1.02:1.98" ensuring that the lithium-manganese complex oxide as represented by Li(Mn_{1.98}Li_{0.02})O₄ is obtainable. After adding into vessel the mixed solvent consisting of water and alcohol at the ratio of "1:1" (volume ratio), the resulting material was stirred to give a solution. The solvent may be either water or alcohol as long as lithium nitrate and manganese formate can be dissolved in the solvent.

Next, the resulting solution was turned into a mist by using an ultrasonic device and the obtained mist was carried with a carrier gas into the interior of vertical thermal decomposition furnace at adjusted temperature of 600 to 800°C, whereby complex oxide powder was obtained. Thereafter, the resultant complex oxide powder was put into a sagger of alumina and sintered at about 720°C for 24 hours so that complex oxide of Li(Mn_{1.98}Li_{0.02})O₄ was obtained which is shown by Sample 1 in Table 1.

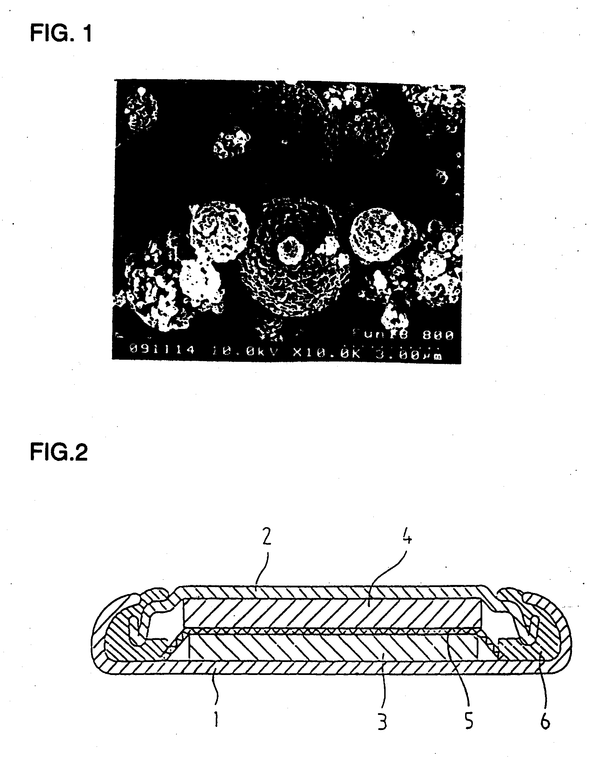

Subsequently, the resulting complex oxide powder was subject to particle shape verification using scanning electron microscope (SEM) equipment and also to analysis by X-ray diffraction (XRD) techniques. While the X-ray diffraction pattern (not shown) was slightly shifted toward the wide angle side, it was well identical to diffraction pattern of cubic-crystalline spinel-structured-structured LiMn₂O₄, and no other diffraction patterns of impurities were observed. It was also affirmed that the crystal diameter or size as determined by calculation based on Scheie's Equation was 95.3 nm which is almost identical in value to the size of primary particles as found in the SEM photograph shown in Fig. 1. It is confirmed that the primary particles consist of single crystals by the fact that no crystalline boundaries were found by experimentation of SEM observation. Furthermore, it can be seen from Fig. 1 that the resulting complex oxide is such that a group of primary particles make up hollow spherical secondary particles with much spacing or gaps therein. A number of gaps that penetrate into the inside space reside in the surface of such hollow spherical secondary particles.

Next, other complex oxide powder samples labeled as Samples 2 to 7 which are different from one another in crystalline size were obtained in a way similar to that of the powder Sample 1 except for adjustment of the temperature for the spray pyrolysis and the sintering temperature. SEM equipment was again used to affirm resultant particle shapes while analyzing by X-ray diffraction techniques for measurement of respective crystalline diameters.

Thereafter, secondary batteries were manufactured with resultant complex oxides as cathode active materials thereof.

More specifically, 100 parts by weight of the complex oxide, 5 parts by weight of acetylene black as conductive agent, 5 parts by weight of polyethylene tetrafluoride serving as binder were kneaded and shaped into sheets. Each of the sheets was attached under pressure to a 17 mm-diameter disc of a SUS mesh to form a cathode 3.

Thereafter, as shown in Fig. 2, an anode 4 of lithium metal (diameter: 17 mm, thickness: 0.2 mm) was stacked on the cathode 3 via a polypropylene separator 5 in such a way that the SUS mesh of the cathode 3 faces outward, and the stacked anode 4 and cathode 3 were hold in a cathode cell 1 so that the cathode 3 faces downward. Then, an electrolytic solution was infiltrated into the separator 5. As the electrolytic solution, used herein was a solution prepared by dissolving LiPF₆ in an equal-volume mixture solvent of ethylene carbonate and dimethyl carbonate at a ratio of 1 mol/l. Thereafter, the opening of cathode cell 1 was sealed by a anode plate 2 made of stainless steel with a dielectric packing member 6 being sandwiched therebetween, thereby obtaining a lithium secondary battery.

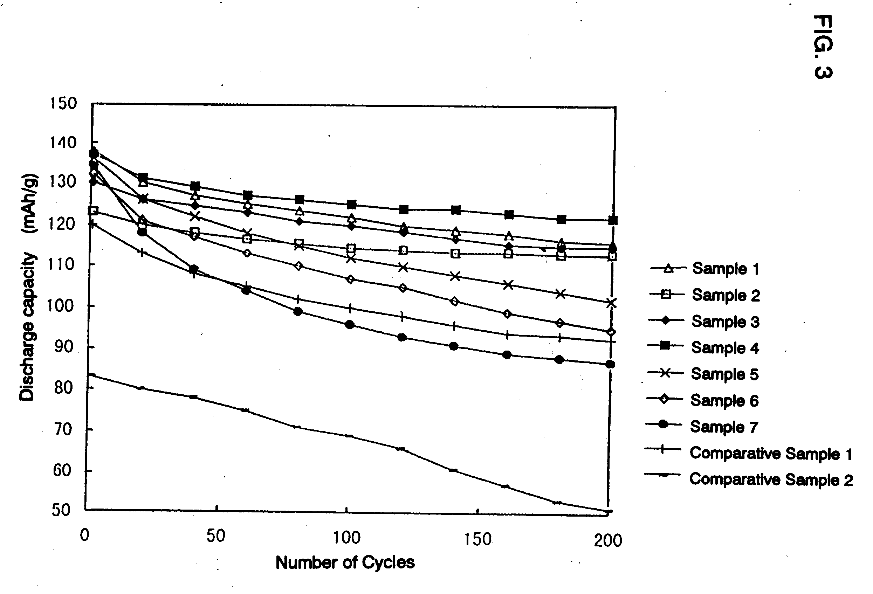

Next, the lithium secondary battery thus obtained was subject to charging-discharging test of 200 cycles under the condition that the charge-discharge current density was 1.0 mA/cm², the maximum charge voltage was 4.3 V and the cut off discharge voltage was 3.0 V. The test results are shown in Fig. 3. It is to be noted that the sample numbers used in Fig. 3 are corresponds to those of the complex oxide powder employed as respective cathode active materials.

### Comparison 1:

Lithium nitrate and electrolytic manganese dioxide were prepared as the compound of metal elements constituting the lithium-manganese complex oxide. These lithium nitrate and electrolytic manganese dioxide were put into a vessel after accurate measurement in a way such that the molar ratio of Li to Mn is "1.02:1.98" to ensure that the lithium-manganese complex oxide represented as Li(Mn_{1.98}Li_{0.02})O₄ is attainable. After ball mill crushing or disintegration is carried out using alcohol as a solvent and PSZ as its cobblestone for 30 hours, the solvent was removed away using evaporator so that substantive material powder was obtained.

Next, the powder was put in a sagger made of alumina and sintered at 600°C for 48 hours so as to allow lithium to be melted and permeated into electrolytic manganese dioxide, thereby obtaining the complex oxide.

Subsequently, the complex oxide powder was subject to particle shape verification using scanning electron microscope (SEM) equipment and also to analysis by X-ray diffraction (XRD) techniques. While the X-ray diffraction pattern (not shown) was slightly shifted to the wide angle side, it was identical to diffraction pattern of cubic-crystalline spine-structured-structured LiMn₂O₄, and no other diffraction patterns of impurities were observed. It was also affirmed that the crystalline diameter as determined by calculation based on Scheie's Equation was 42.6 nm which is different from the size of primary particles as verified using SEM equipment. This means that the primary particles consist of polycrystals. Additionally, experimentation using SEM reveals that the particle shape exhibits massive one.

The secondary battery thus obtained was manufactured in a way similar to that of the illustrative embodiment and then subject to charge-discharge test. The test results are shown in Fig. 3.

### Comparison 2:

Lithium carbonate and manganese carbonate were prepared as the compound of metal elements constituting the lithium-manganese complex oxide. These lithium carbonate and manganese carbonate were put into a vessel after accurate measurement in such a way that the Li-to-Mn molar ratio is "1.02:1.98" to ensure that an intended lithium-manganese complex oxide represented by Li(Mn_{1.98}Li_{0.02})O₄ is obtainable. After ball mill crushing or disintegration is performed using alcohol as a solvent and PSZ as its cobblestone for 30 hours, the solvent was then removed away using evaporator so that substantive material powder was obtained.

This powder was then put into a sagger made of alumina and sintered at 900°C for 48 hours. The obtained complex oxide was milled for 30 hours with a ball mill and dried to obtain the final complex oxide.

Next, the resultant complex oxide powder was subject to verification of particle shape using scanning electron microscope (SEM) equipment and also to analysis by X-ray diffraction (XRD) techniques. While the X-ray diffraction pattern (not shown) was slightly shifted to the wide angle side, it was identical to diffraction pattern of cubic-crystalline spinel-structured LiMn₂O₄, and no other diffraction patterns of impurities were observed. It was also affirmed that the crystalline size as calculated from Scheie's Equation was 48.3 nm which is different from the size of primary particles as confirmed by SEM experimentation. This means that the primary particles consist of polycrystals. Additionally, the SEM experimentation also reveals that the particle shape was like mass.

Next, a secondary battery was manufactured in a way similar to that of the illustrative embodiment and then subject to charge-discharge test. The rest results are shown in Fig. 3.

**Table 1**

| Sample No. | Particle shape | Primary particle | Crystalline diameter (nm) |
|---|---|---|---|
| 1 | Hollow spherical | Single crystal | 95.3 |
| 2 | Hollow spherical | Single crystal | 500 |
| 3 | Hollow spherical | Single crystal | 150 |
| 4 | Hollow spherical | Single crystal | 71.8 |
| 5 | Hollow spherical | Single crystal | 61.5 |
| 6 | Hollow spherical | Single crystal | 51.3 |
| 7 | Hollow spherical | Single crystal | 25.3 |
| Comp. Sample 1 | Massive | Polycrystal | 42.6 |
| Comp. Sample 2 | Massive | Polycrystal | 48.3 |

As is understood from Table 1 and Fig. 3, a lithium secondary battery having a high initial discharge capacity as compared to the prior art can be obtained by employing as the cathode active material the spine-structured lithium-manganese complex oxide which essentially consists of hollow spherical secondary particles obtained by sintering single crystalline primary particles. This is because electrolytic solution may soak thoroughly into every single crystal of the complex oxide to suppress occurrence of overvoltages during charge-discharge operations.

It is also understood from Fig.3 that the lithium second battery having a large battery capacity and excellent charge-discharge cycle characteristics can be obtained by setting the average crystalline diameter of primary particles at about 70 to 500 nm. This is because the specific surface area of the complex oxide does not become so large as to cause decomposition of the electrolytic solution if the diameter of primary particles is greater than 70nm. This is also because the complex oxide is stable with respect to absorption and desorption of lithium due to the high crystallinity of the primary particles. It is noted that if the primary particles become too large in average crystalline size, the primary particles may not be sintered successfully to form a hollow spherical secondary particles. The specific surface area of the complex oxide may also become too small to decrease battery capacity. Accordingly, it is preferable to set the average diameter of the primary particles at about 500 nm or less.

In contrast, Comparative Sample 1 has a small initial discharge capacity and poor charge-discharge cycle characteristics because the particles of the comparative Sample 1 is polycrystalline with poor crystallinity and has no structure which allows the electrolytic solution to soak into the inside of the complex oxide. Comparative Sample 2 also suffers from like disadvantages and lack of sample uniformity, which results in a decrease both in initial discharge capacity and in charge-discharge cycle characteristics.

It should be noted that although the foregoing illustrative embodiment was described under an assumption that the spine-structured lithium-manganese complex oxide is Li(Mn_{1.98}Li_{0.02})O₄, the present invention should not exclusively be limited thereto. In other words, the invention may alternatively be applicable to any one of spinel-structured lithium-manganese complex oxide materials with no limitation to composition. In particular, the invention may offer similar advantages upon application to those compounds that are represented by the general formula: Li(Mn₂₋ₓLiₓ)O₄ (where x is 0 ≤ x ≤ 0.1). The invention may also attain similar expected advantages in the case where a part of Mn cite of the materials given by the general formula: Li(Mn₂₋ₓLiₓ)O₄ (where x is 0 ≤ x ≤ 0.1) is replaced with Cr, Ni, Fe, Co, Mg or the like. In this case, the compounds applicable to the present invention are represented by the general formula:

Li(Mn_{2-x-y} A_{y}Liₓ)O₄ (where 0 ≤ x+y ≤ 0.1, A=Cr, Ni, Fe, Co, Mg).

## Claims

1. A lithium secondary battery comprising:
an anode comprising, as an active material, one of a material capable of absorbing and disorbing lithium ions, lithium metal and lithium alloy;
a cathode comprising spinel-structured lithium-manganese complex oxide as an active material, the spinel-structured lithium-manganese complex oxide being in the form of hollow spherical secondary particles formed by sintering single crystalline primary particles; and
one of a separator containing nonaqueous electrolytic solution and solid-state electrolyte, interposed between the anode and the cathode.

2. The lithium secondary battery according to claim 1, wherein the primary particles have an average diameter of about from 70 to 500 nm.

3. The lithium secondary battery according to claim 1 or 2. wherein the spinel-structured lithium-manganese complex oxide is represented by a general formula:
Li(Mn₂₋ₓLiₓ)O₄ (where 0 ≤ x ≤ 0.1).

4. The lithium secondary battery according to claim 1 or 2, wherein the spinel-structured lithium-manganese complex oxide is represented by a general formula:
Li(Mn_{2-x-y} A_{y}Liₓ)O₄ (where 0 ≤ x+y ≤ 0.1, A=Cr, Ni, Fe, Co, Mg).
